# EUROPEAN PATENT SPECIFICATION

(11) **EP 1 877 300 B1**
(45) Date of publication and mention of the grant of the patent: **15.10.2008**
(21) Application number: 06721559.0
(22) Date of filing: 28.04.2006
(51) Int. Cl.: B62K 21/12, B62K 21/16

(54) **HANDLEBAR EXTENSION**
LENKERVERLÄNGERUNG
EXTENSION DE GUIDON

(30) Priority: 03.05.2005 EP 05447100
(43) Date of publication of application: 16.01.2008
(73) Proprietor: Bruyere Denis, B-4910 Theux (BE)
(72) Inventor: Bruyere Denis, B-4910 Theux (BE)
(74) Representative: Lerho, Marc J. A.
(86) International application number: PCT/BE2006/000042
(87) International publication number: WO 2006/116827

(56) References cited:
- US-A- 3 289 493
- US-A- 4 930 798
- US-A- 5 121 652
- US-A- 5 319 995
- US-A- 5 326 122

## Description

### Field of the invention

The present invention relates to a handlebar extension which is mountable on any existing or commercially manufactured bicycles, such as touring bicycles or mountain bikes (MTB).

### Technical background and state of the art

Bicycle design tends to be driven by the needs of racing cyclists. However racing styles and positions are not necessarily suited to the needs of the touring cyclist.

The racer is looking for a fastest and thus most aerodynamic or flat position, or a position where he is frequently upward on the pedals, while, on the contrary, the touring cyclist is not seeking speed but endurance and less intense pedalling, less extreme effort, with much more time spent on the saddle. In other words, the touring cyclist or the casual recreational cyclist is likely to seek a more upright posture, which is not compatible with a low handlebar position.

Additionally the position preferences on a bicycle also vary with age. Particularly, an upright position on the bike is required when the cyclist suffers back pains for example.

More particularly, the inclination angle and height of the handlebar of the bicycle is also largely a matter of personal preference owing to comfort, efficiency and balance considerations.

Achieving a comfortable position will often involve substituting a different handlebar stem, to move the handlebars higher or closer to the saddle, or both.

As mentioned in application FR-A-2682348, a dynamic adjustment at least of the handlebar of a touring bicycle or a MTB would be highly desirable and influencing positively comfort of the biker, especially on undulating roads or fields. Indeed, the position of the cyclist's chest is rather directed backwards on the saddle and upright when climbing a hillside or in a relaxed ride on a flat field (so-called "Dutch" bicycle position). As a consequence the shoulders are rather distant from the handlebar in such a position. On the other side, riding downhill requires an aerodynamic, low and flat position of the body (race bicycle position).

Usually, a bicycle comprises a tube frame with front forks supporting the front wheel. In the frame tube extending the forks is inserted a handlebar stem or a riser which is supporting a handlebar possibly provided with grips. Generally, the handlebar stem also comprises a stem extender, which is a tubular piece more or less horizontal and finished with a clamp for effectively linking and fastening the handlebar to the stem. The stem extender is either welded or attached with a bolt to the stem.

Changing the height of the handlebar requires adjusting by moving up and down the handlebar stem. Moreover some devices allow adjusting the distance between the handlebar and the head of the handlebar stem. Both adjustments involve translation movements. The position of the handlebar itself may also be changed by rotating the latter. Moreover, changing the relative position of the handlebar about the saddle simply requires changing the handlebar model. Of course, all these operations cannot be done when riding the bicycle. They require the stop position and very often some tools.

Recently embodiments of the handlebar stem have appeared, wherein the stem extender inclination is adjustable pivotally using an adjusting bolt. An example of such a configuration is given in document US-A-5,509,328. An advantage of this device is a clamping system permitting to easily and quickly replace the handlebar without having to dismantle the brake lever, the derailleur, etc. Additionally, the handlebar extender may be angularly adjusted in a somewhat wide range.

The document US-A-2004/0016316 provides a solution of this type but less complicated, not requiring replacement of the original handlebar or riser, when it is desired to adjust the position of the handlebar up and down, and forwards and backwards. This solution provides an intermediate structure mounting on the original riser, linking the latter to and securing the original handlebar.

Document DE-A-42 23 317 describes an additional handlebar fitted to the existing handlebar of a bicycle to provide the cyclist with an occasional change of riding position. The additional handlebar consists of two tubes fitting telescopically one inside the other.

Document US-A-3,803,937 relates to an improvement for bicycles having drop-style handlebar. The brake handles are extended to both sides of its pivotal point of attachment to the handlebar. A quick release connection of the handlebar to its support post permits rotation of the handlebar with respect to the support post.

Document FR-A-2 682 348 relates to a variable-geometry cycle handlebar stem including an assembly of two elements articulated together, one of these elements supporting the handlebar and the other one articulated with respect to the top of the handlebar stem.

A preferred embodiment comprises two stub axles which are articulated and indexed using a brake system such as a system with complementary or analogous notches. The brake system can be with direct control, using toothed wheels for locking the articulations in the wanted position of the stub axles or indirect using an hydraulic system located for instance on the braking system. Anyway, while this system allows the biker to make suitable adjustments during riding, it requires complicated and possibly fragile blocking elements.

Document FR-A-2 671 324 discloses a combination of a handlebar which is articulated, the handles of which are carried by two deformable parallelograms located in a substantially horizontal plane, and a saddle support formed of a deformable parallelogram located in a vertical plane, so that the handles of the handlebar, as well as the saddle, can adopt a normal position or a forward position, the movements taking place simultaneously by virtue of a linkage system (hydraulic, cables, etc.) which can be locked or unlocked by the cyclist when riding along.

Document DE-A-198 18 456 describes an articulated lever allowing to choose between a high and a low saddle positions, the lever being clamped in the effectively chosen position.

Document US-A-3,289,493 discloses a a handlebar extension for a bicycle according to the preamble of present claim 1. Said handlebar extension if formed as a control stick attachment having a gooseneck with an upwardly projecting base and an upwardly and forwardly projecting upper end secured to handlebars. The control stick attachment comprises: a rod formed into a triangular shaped rigid body; a control stick grip extending upwardly generally normal to said body at the apex of said triangle for gripping; a pair of spaced clamps on the base of said triangle opposite said apex for attachment to the bicycle handlebars on opposite sides of the gooseneck; said base including a bight depending from said body between said clamps, to extend down and abut the gooseneck, whereby said clamps and bight provide three point bearing while allowing control of the bicycle with said stick.

### Aims of the invention

The present invention aims to provide a solution which does not suffer from the drawbacks of prior art.

Particularly the invention aims at proposing a simple device to be mounted on a handlebar allowing the cyclist to change its position on the bicycle when riding along, without using any complicated or fragile fastening systems.

Additionally, a goal of the invention is to provide a handlebar extension not requiring any mechanical modifications of the original handlebar.

### Summary of the invention

A first object of the present invention is a handlebar extension mountable on a bicycle, such as a touring bicycle or a mountain bike, comprising an original handlebar fastened to a handlebar stem, characterised in that said handlebar extension comprises means for attaching pivotally said handlebar extension to the original handlebar, so that said handlebar extension is free to rotate about the axis of the original handlebar during riding, providing to the user a number of equilibrium riding positions.

Preferably said means comprise a clamping system.

According to a preferred embodiment, the clamping system comprises a first element belonging to a back side of the extension and a second element free to move and to be adjusted on a top side of the extension, said first and said second elements presenting corresponding bores to accommodate a screw. This screw may be advantageously a screw with a flat round end located on said back side, configured to co-operate on said top side with a nut, preferably a butterfly nut, or inversely. Most advantageously, said screw and said nut may level out at the surface of said first or said second element.

According to the invention, said first and said second elements are designed to make a first transverse cylindrical orifice for accommodating the original handlebar, whose diameter is preferably comprised between 25,4 and 29 mm.

Advantageously, a friction ring is inserted in said orifice to better control the rotation of the handlebar extension in relation with the force or pressure exerted by the rider on the handlebar.

Preferably, the clamping system comprises an arm to be clamped on the original handlebar on each side of the central handlebar stem.

In a preferred embodiment, the extension comprises a first stop located on said top side for limiting the angular movement of said extension to an essentially upright position and/or a second stop located on said back side for limiting the angular movement of said extension to an essentially horizontal position.

Preferably, said stops are centrally located on the extension.

Advantageously, the handlebar extension is provided with means for connecting or hitching accessories, for example a central groove or slot disposed centrally on said top side, holes, clips, straps or racks.

Still advantageously, it is provided with a second transverse cylindrical orifice located at the end opposite to the end for attachment to the original handlebar, configured to accommodate an additional handlebar.

Again advantageously, it comprises tightening means, such as a blocking screw, to fasten said additional handlebar.

A second object of the invention is a bicycle provided with a handlebar extension as described above.

In a first preferred embodiment, the original brake system of the bicycle is doubled, the second part of the brake system being fastened to the handlebar extension or to an additional handlebar fixed to the handlebar extension.

In a second preferred embodiment, the bicycle is provided with a brake system independent of the original brake system, said independent brake system being fastened to the handlebar extension or to an additional handlebar fixed to the handlebar extension.

### Short description of the drawings

FIG. 1 schematically represents three characteristic positions of a cyclist riding a bicycle equipped with the handlebar extension of the present invention : a first position when climbing a hillside, a second position when arriving on the hilltop and a third one when continuing on a flat field portion.

FIG. 2 represents a plan view and a side view respectively of a handlebar extension according to a preferred embodiment of the invention.

FIG. 3 to FIG. 6 represent a number of views of a handlebar extension according to another preferred embodiment of the invention.

### Description of a preferred embodiment of the invention

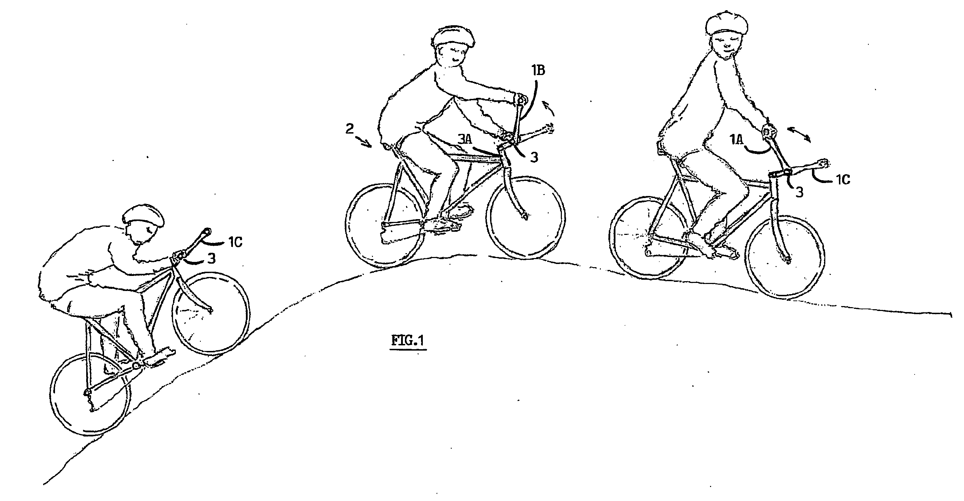

As shown schematically in FIG. 1, the invention proposes a handlebar extension which can be mounted on any existing or commercially available handlebar, such as a drop-style, a touring bicycle or a MTB handlebar.

By conception, the handlebar extension according to the present invention can be pivotally mounted on the existing handlebar and not, as commonly described in prior art, on the handlebar stem or on a stem extender. A minimal friction is provided between the original handlebar and the handlebar extension so that to assure a link which is not too loose.

The movement of the handlebar extension is essentially governed, during riding, by the forces exerted on it by the biker constantly seeking a balanced position according to the slope of the road or of the field.

As simple matter of example shown on FIG. 1, the cyclist is riding uphill and uses only the original handlebar. Alternatively, he could well adopt a much more upright position in order to better pull on the grips. In this example, the user has pushed forward the handlebar extension, in order not to be hampered by the latter. When the cyclist is coming on the top of the hill, he can pull the extension towards him up to a stop to get a much more upright handlebar allowing him to straighten up on the saddle and continue his ride in this position.

It is an essential characteristic of the invention that, contrary to the situation in any prior art disclosure, the handlebar extension is free to rotate about the axis of the original handlebar, during riding. In other words, no fastening means are required to lock the handlebar system in a chosen position. As can be seen on FIG. 1, the maximal angle variation is roughly 90°. The limits of this angle variation are set by physical stops, assuring safe riding. However, there is a range of intermediate angle positions (between 1A and 1C positions) wherein the cyclist can find a general balanced position for his whole body, again under very safe riding conditions.

Contrary to prior art devices, the solution provided by the present invention is very safe in case of a forward fall, which is somewhat frequent, in the sense that the handlebar follows the movement of the body.

These safety conditions are likely to be related to a mounting of the piece of the invention on bicycles equipped with handlebar stems, which horizontal extender part is not too long. It is conceivable for the one skilled in the art that the best equilibrium results will be obtained when the extension bar in its upright position is essentially prolonging the handlebar stem and the forks tube.

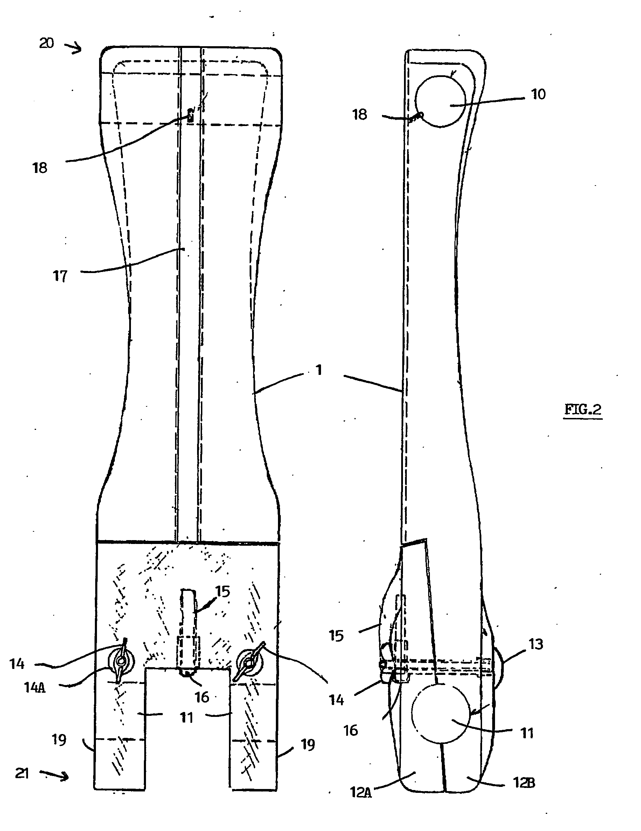

According to a preferred embodiment of the invention, the basic handlebar extension member 1 is shown on FIG. 2. At a first end 20 of the extension 1, a cylindrical orifice 10 is provided transversally in order to install, optionally, a second handlebar 3B possibly provided with grips and which can be fastened by use of a blocking screw 18 (FIG. 1, 3 and 6). Any orifice diameter is covered by the invention, but it will be preferably comprised between 25,4 mm or 1" (ISO standard) and 28,6 mm.

At a second end 21 of the extension 1, a double-part clamping system is provided in order to pivotally accommodate the original handlebar 3. The clamping system comprises a fixed part 12B belonging to the extension 1 and a removable and adjustable part 12A, which can assure the pivotable link between the extension 1 and the original handlebar 3, on each arm of the clamping system, by use of a flat round screw 13 passing through a bore made in each of the two parts 12A, 12B and co-operating with a butterfly nut 14. The link forms an orifice 11 to accommodate the original handlebar 3 and must be sufficiently loose to permit pivotable movement of the extension 1. If necessary, a friction ring can be inserted in the orifice 11 to improve the results or to provide a pressure-related functioning.

In an alternative preferred embodiment, the extension 1 can be provided with means so that to make its length variable and adjustable.

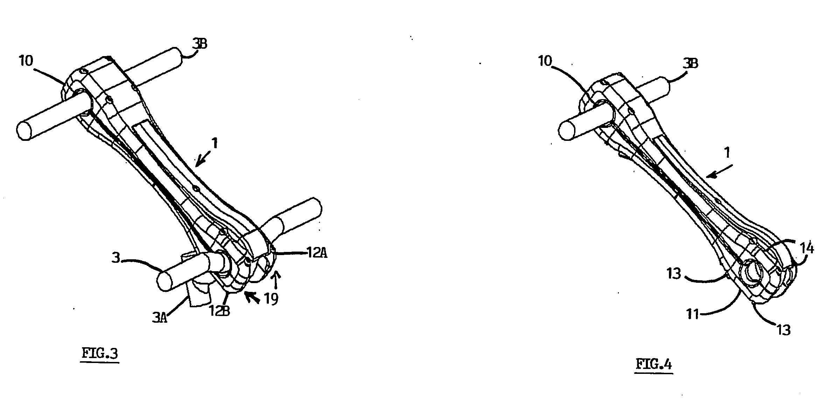

In another preferred embodiment shown on FIG. 3 to 6, both parts 12A and 12b are manufactured in a single part with the extension 1. The extension may also be designed so that the bolts or screws 13, 14 may level out at the surface of the parts 12A, 12B.

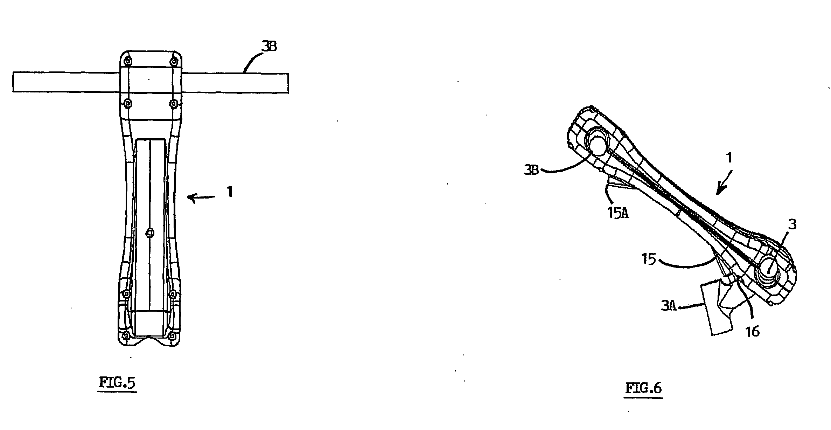

On its front side, i.e. the side directed to the bicycle, the extension presents an adjustable stop 15, which can be adjusted by use of a screw 16 located in a bore made essentially longitudinally in the extension 1 (FIG. 2 and 6). As can be seen on FIG. 6, the stop 15 provides an extreme position for the extension 1 in which its longitudinal axis is roughly in the same direction as the handlebar stem axis. Note that a symmetric stop 15A may be provided about a median plane in the transverse direction, so that the handlebar extension 1 can be possibly reversed. A second stop is naturally provided in the rear side, i.e. directed away from the bicycle, by the extension of the handlebar stem 3A.

Moreover, again on its front side, the extension 1 can be provided longitudinally with a groove 17 for optionally inserting a document case. It may also be provided with other means such as holes, clips, straps, racks and so on, for attaching various accessories.

The handlebar extension 1 can furthermore be equipped by doubled brakes or an independent set of brakes, possibly located on the additional handlebar 3B inserted in hole 10.

## Claims

1. A handlebar extension (1) mountable on a bicycle (2), such as a touring bicycle or a moutain bike, comprising an original handlebar (3) fastened to a handlebar stem (3A), said handlebar extension (1) comprising
- means (12A, 12B, 13, 14) for attaching pivotally said handlebar extension (1) to an original handlebar (3);
- said means (12A, 12B, 13, 14) comprising a clamping system assuring a pivotable link between the handlebar extension (1) and an original handlebar;
the handlebar extension (1) further comprising
- a first stop (15) located on a front side of the handlebar extension (1) for limiting the angular movement of said handlebar extension (1) to a first essentially upright position, and
- a second stop located on a back side of the handlebar extension (1), said second stop being suitable for limiting the angular mouvement of the handlebar extension (1) to a second essentially horizontal position,
**characterised in that**
the clamping system comprises a first element (12B), belonging to the rear side of the handlebar extension (1), and a second element (12A), free to move and to be adjusted on the front side of the handlebar extension (1), said first and second elements (12A, 12B) being designed to make a first transverse cylindrical orifice (11) to pivotally accommodate the original handlebar (3), so that said handlebar extension (1) is free to rotate about the axis of the original handlebar during riding.

2. Handlebar extension (1) according to Claim 1, **characterised in that** the first and the second elements (12A, 12B) present corresponding bores to accommodate a screw (13).

3. Handlebar extension (1) according to Claim 2, **characterised in that** said screw is a screw with a flat round end (13) located on said rear side, configured to cooperate on said front side with a nut (14), preferably a butterfly nut, or inversely.

4. Handlebar extension (1) according to anyone of Claims 1 to 3, **characterised in that** the diameter of the cylindrical orifice (11) is comprised between 25,4 and 29 mm.

5. Handlebar extension (1) according to anyone of the preceding Claims, **characterised in that** a friction ring is inserted in said cylindrical orifice (11).

6. Handlebar extension (1) according to anyone of the preceding Claims, **characterised in that** the clamping system comprises an arm (19) to be clamped on the original handlebar (3) on each side of the central handlebar stem (3A).

7. Handlebar extension (1) according to anyone of the preceding Claims, **characterised in that** said first stop (15) is centrally located on the extension (1).

8. Handlebar extension (1) according to anyone of the preceding Claims, **characterised in that** it is provided with means for connecting or hitching accessories, for example a central groove or slot (17) disposed centrally on said top side, holes, clips, straps or racks.

9. Handlebar extension (1) according to anyone of the preceding Claims, **characterised in that** it is provided with a second transverse cylindrical orifice (10) located at the end opposite to the end for attachment to the original handlebar (3), configured to accommodate an additional handlebar (3B).

10. Handlebar extension (1) according to Claim 11, **characterised in that** it comprises tightening means, such as a blocking screw (18), to fasten said additional handlebar (3B).

11. Bicycle provided with a handlebar extension (1) according to anyone of the preceding Claims.

12. Bicycle according to Claim 11, **characterised in that** the original brake system is doubled, the second part of the brake system being fastened to the handlebar extension (1) or to an additional handlebar (3B) fixed to the handlebar extension (1).

13. Bicycle according to Claim 11, **characterised in that** it is provided with a brake system independent of the original brake system, said independent brake system being fastened to the handlebar extension (1) or to an additional handlebar (3B) fixed to the handlebar extension (1).

## Patentansprüche

1. Eine Lenkererweiterung (1) zum Anbau an ein Fahrrad (2), wie z. B. ein Tourenfahrrad oder ein Mountainbike, das aus einem ursprünglichen Lenker (3) besteht, der an einem Lenkervorbau (3A) befestigt wird; hierbei umfasst die besagte Lenkererweiterung (1)
- Hilfsmittel (12A, 12B, 13, 14) für die drehbare Befestigung besagter Lenkererweiterung (1) an dem ursprünglichen Lenker (3);
- Besagte Hilfsmittel (12A, 12B, 13, 14) umfassen ein Klemmsystem, das die drehbare Verbindung zwischen der Lenkererweiterung (1) und dem ursprünglichen Lenker sicherstellt;
Die Lenkererweiterung (1) umfasst ferner
- Einen ersten Anschlag (15), der sich auf der Vorderseite der Lenkererweiterung (1) zur Begrenzung der Winkelbewegung der besagten Lenkererweiterung (1) in einer ersten, im Wesentlichen aufrechten Position befindet, sowie
- Einen zweiten Anschlag, der sich auf der Rückseite der Lenkererweiterung (1) befindet; der besagte zweite Anschlag eignet sich für die Begrenzung der Winkelbewegung der Lenkererweiterung (1) auf eine zweite, im Wesentlichen horizontale Position.
Diese Lenkererweiterung ist **dadurch gekennzeichnet, dass** das Klemmsystem ein erstes Element (12B) umfasst, das zu der Rückseite der Lenkererweiterung (1) gehört, sowie ein zweites Element (12A), das auf der Vorderseite der Lenkererweiterung (1) frei beweglich und hier einstellbar ist; die besagten ersten und zweiten Elemente (12A, 12B) sind so konstruiert, dass sie eine erste quer liegende zylindrische Mündung (11) bilden, die den ursprünglichen Lenker (3) drehbar aufnimmt, sodass die besagte Lenkererweiterung (1) während der Fahrt frei um die Achse des ursprünglichen Lenkers rotieren kann.

2. Lenkererweiterung (1) gemäß Anspruch 1, **dadurch gekennzeichnet, dass** die ersten und zweiten Elemente (12A, 12B) entsprechende Bohrungen für die Aufnahme einer Schraube (13) aufweisen.

3. Lenkererweiterung (1) gemäß Anspruch 2, **dadurch gekennzeichnet, dass** es sich bei der besagten Schraube um eine Schraube mit flachem, rundem Ende (13) handelt, die sich auf der besagten Rückseite befindet und so konstruiert ist, dass sie auf der besagten Vorderseite mit einer Mutter (14), vorzugsweise einer Flügelmutter, zusammenwirkt. Gleiches gilt für eine umgekehrte Anordnung.

4. Lenkererweiterung (1) gemäß einem der Ansprüche 1 bis 3, **dadurch gekennzeichnet, dass** der Durchmesser der zylindrischen Mündung (11) zwischen 25,4 und 29 mm liegt.

5. Lenkererweiterung (1) gemäß einem der vorherigen Ansprüche, **dadurch gekennzeichnet, dass** in die besagte zylindrische Mündung (11) ein Schleifring eingesetzt wird.

6. Lenkererweiterung (1) gemäß einem der vorherigen Ansprüche, **dadurch gekennzeichnet, dass** das Klemmsystem einen Arm (19) umfasst, der sich an dem ursprünglichen Lenker (3) auf jeder Seite des zentralen Lenkervorbaus (3A) festklemmen lässt.

7. Lenkererweiterung (1) gemäß einem der vorherigen Ansprüche, **dadurch gekennzeichnet, dass** der besagte erste Anschlag (15) sich mittig an der Erweiterung (1) befindet.

8. Lenkererweiterung (1) gemäß einem der vorherigen Ansprüche, **dadurch gekennzeichnet, dass** er mit Hilfsmitteln für den Anschluss oder das Ankoppeln von Zubehör, z. B. einer/einem zentralen Nut oder Schlitz (17), die/der mittig auf der besagten Oberseite angebracht ist, Bohrungen, Clips, Laschen oder Einschubgehäusen, ausgestattet ist.

9. Lenkererweiterung (1) gemäß einem der vorherigen Ansprüche, **dadurch gekennzeichnet, dass** sie mit einer zweiten, quer liegenden zylindrischen Mündung (10) ausgestattet ist, die sich am Ende gegenüber dem Ende für die Befestigung am ursprünglichen Lenker (3) befindet und so ausgelegt ist, dass ein zusätzlicher Lenker (3B) aufgenommen werden kann.

10. Lenkererweiterung (1) gemäß Anspruch 11, **dadurch gekennzeichnet, dass** sie Hilfsmittel für die Befestigung, wie z. B. eine Feststellschraube (18) umfasst, um besagten zusätzlichen Lenker (3B) zu befestigen.

11. Ein mit einer Lenkererweiterung (1) gemäß einem der vorherigen Ansprüche ausgestattetes Fahrrad.

12. Fahrrad gemäß dem Anspruch 11, **dadurch gekennzeichnet, dass** das ursprüngliche Bremssystem verdoppelt und der zweite Teil des Bremssystems an der Lenkererweiterung (1) oder einem zusätzlichen, an der Lenkererweiterung (1) angebrachten Lenker (3B) befestigt wird.

13. Fahrrad gemäß dem Anspruch 11, **dadurch gekennzeichnet, dass** es mit einem vom ursprünglichen Bremssystem unabhängigen Bremssystem ausgestattet ist; hierbei ist das besagte unabhängige Bremssystem an der Lenkererweiterung (1) oder an einem an der Lenkererweiterung (1) angebrachten, zusätzlichen Lenker (3B) befestigt.

## Revendications

1. Rallonge de guidon (1) qui peut être montée sur un vélo (2) comme un vélo de tourisme ou un vélo tout terrain, comprenant un guidon d'origine (3) fixé sur une tige de guidon (3A), ladite rallonge de guidon (1) comprenant
- des moyens (12A,12B,13,14) pour fixer par pivotement ladite rallonge de guidon (1) à un guidon d'origine (3);
- lesdits moyens (12A,12B,13,14) comprenant un système de serrage assurant une liaison pivotante entre la rallonge de guidon (1) et un guidon d'origine ;
la rallonge de guidon (1) comprenant en outre
- un premier arrêt (15) sur une face avant de la rallonge de guidon (1) pour limiter le mouvement angulaire de ladite rallonge de guidon (1) à une première position essentiellement droite, et
- un second arrêt sur une face arrière de la rallonge de guidon (1), ledit second arrêt étant approprié pour limiter le mouvement angulaire de la rallonge de guidon (1) à une seconde position essentiellement horizontale,
**caractérisée en ce que**
le système de serrage comprend un premier élément (12B), faisant partie de la face arrière de la rallonge de guidon (1) et un second élément (12A), libre de se déplacer et d'être réglé sur la face avant de la rallonge de guidon (1), lesdits premier et second éléments (12A,12B) étant conçus pour réaliser un premier orifice cylindrique transversal (11) pour accueillir par pivotement le guidon d'origine (3), de façon à ce que ladite rallonge de guidon (1) soit libre de pivoter autour de l'axe du guidon d'origine pendant la promenade.

2. Rallonge de guidon (1) selon la revendication 1, **caractérisée en ce que** le premier et le second élément (12A,12B) présentent des alésages correspondants pour accueillir une vis (13).

3. Rallonge de guidon (1) selon la revendication 2, **caractérisée en ce que** ladite vis est une vis à extrémité ronde et plate (13) située sur ladite face arrière, configurée pour coopérer sur ladite face avant avec un écrou (14), de préférence un écrou papillon, ou inversement.

4. Rallonge de guidon (1) selon l'une quelconque des revendications 1 à 3, **caractérisée en ce que** le diamètre de l'orifice cylindrique (11) est compris entre 25,4 et 29 mm.

5. Rallonge de guidon (1) selon l'une quelconque des revendications précédentes, **caractérisée en ce qu'**une bague de friction est insérée dans ledit orifice cylindrique (11).

6. Rallonge de guidon (1) selon l'une quelconque des revendications précédentes, **caractérisée en ce que** le système de serrage comprend un bras (19) à serrer sur le guidon d'origine (3) de part et d'autre de la tige de guidon centrale (3A).

7. Rallonge de guidon (1) selon l'une quelconque des revendications précédentes, **caractérisée en ce que** ledit premier arrêt (15) occupe une position centrale sur la rallonge (1).

8. Rallonge de guidon (1) selon l'une quelconque des revendications précédentes, **caractérisée en ce qu'**elle est pourvue de moyens pour relier ou accrocher des accessoires, par exemple une rainure ou une fente centrale (17) occupant une position centrale sur ledit sommet, des orifices, des attaches, des lanières ou des crémaillères.

9. Rallonge de guidon (1) selon l'une quelconque des revendications précédentes, **caractérisée en ce qu'**elle est pourvue d'un second orifice cylindrique transversal (10) à l'extrémité opposée à l'extrémité prévue pour la fixation au guidon d'origine (3), configurée pour accueillir un guidon supplémentaire (3B).

10. Rallonge de guidon (1) selon la revendication 11, **caractérisée en ce qu'**elle comprend des moyens de serrage, comme une vis de blocage (8), pour fixer ledit guidon supplémentaire (3B).

11. Vélo doté d'une rallonge de guidon (1) selon l'une quelconque l'une des revendications précédentes.

12. Vélo selon la revendication 11, **caractérisé en ce que** le système de frein d'origine est doublé, la seconde partie du système de frein étant fixée à la rallonge de guidon (1) ou à un guidon supplémentaire (3B) fixé à la rallonge de guidon (1).

13. Vélo selon la revendication 11, **caractérisé en ce qu'**il est doté d'un système de frein indépendant du système de frein d'origine, ledit système de frein indépendant étant fixé à la rallonge de guidon (1) ou à un guidon supplémentaire (3B) fixé à la rallonge de guidon (1).
